# EUROPEAN PATENT SPECIFICATION

(11) **EP 2 885 134 B1**
(45) Date of publication and mention of the grant of the patent: **03.10.2018**
(21) Application number: 12883032.0
(22) Date of filing: 16.08.2012
(51) Int. Cl.: B41M 5/50, B41M 5/52

(54) **MEDIA COMPOSITION**
MEDIENZUSAMMENSETZUNG
COMPOSITION DE SUPPORTS

(43) Date of publication of application: 24.06.2015
(73) Proprietor: Hewlett-Packard Development Company, L.P., Houston, Texas 77070 (US)
(72) Inventor: ALFEKRI, Dheya, San Diego, California 92127 (US); SELENSKY, Ronald, J., San Diego, California 92127 (US); DRAKE, Mark, San Diego, California 92127 (US)
(74) Representative: Liesegang, Eva
(86) International application number: PCT/US2012/051102
(87) International publication number: WO 2014/028018

(56) References cited:
- EP-A1- 0 545 470
- WO-A1-2007/024474
- KR-A- 20050 054 048
- KR-A- 20100 138 897
- US-A1- 2002 001 697
- US-A1- 2003 118 790
- US-A1- 2006 222 789
- US-A1- 2007 275 190
- US-A1- 2008 166 507
- US-A1- 2009 246 380
- US-B1- 6 270 900
- US-B1- 6 753 069

## Description

### BACKGROUND

Inkjet printing involves the expulsion of droplets of ink onto a media surface. Media used for inkjet printing is treated so that it can absorb liquid from the droplets. The treatment is often a multi-step process, which includes application of a layer of fluidic coating, containing silica or another inorganic material to the media to give the media an absorption capacity for excess liquid from the inkjet ink.

US 2008/166507 relates to an inkjet recording medium.

WO 2007/024474 describes an ink-receiving layer for inkjet recording.

US 2002/001697 describes an ink-jet recording media and the preparing methods.

### BRIEF DESCRIPTION OF THE DRAWINGS

Non-limiting and non-exhaustive implementations of the subject disclosure are described with reference to the following figures, wherein like reference numerals refer to like parts throughout the various views unless otherwise specified.
FIG. 1 is a schematic illustration of a media.
FIG. 2 is a schematic diagram for an extrusion process with one-step nipping with raw paper.
FIG. 3 is a schematic illustration of a media utilized in experiments.
FIG. 4 is a chart illustrating image quality results for media with a PET substrate coated with a polymer resin composed of a polyvinyl alcohol-based resin.
FIG. 5 is a chart illustrating image quality results for media with a raw paper substrate coated with a polymer resin composed of a polyvinyl alcohol-based resin.
FIG. 6 is a chart illustrating image quality results for media coated with a polymer resin composed of a polyamide-based resin and a hydrogel-based resin illustrating the efficacy of a filler.
FIG. 7 is a chart illustrating image quality results for media coated with a polymer resin composed of a polyamide-based resin and a hydrogel-based resin illustrating the effects of magnesium oxide and zinc oxide fillers.
FIG. 8 is a chart illustrating image quality results for media coated with a polymer resin composed of a polyvinyl alcohol-based resin and a hydrogel-based resin.

### DETAILED DESCRIPTION

According to an aspect of the subject disclosure, described herein is a media for receiving printed images thereon. The media includes a substrate and an extruded layer of an ink receptive coating. The extruded layer is extruded on the substrate through a one-step process. The extruded layer includes a polymer resin that facilitates water absorption from inks used in the printing process and creates a media with high durability. The polymer resin includes a hydrogel-based resin and a polyamide-based resin.

When used herein, the terms "extrude" and "extrusion" and their derivatives refer to a coating process, or "extrusion coating." Hot melt extrusion coating is a type of extrusion coating that involves heating a substance (a polymer, including the polymer resins described herein) to a temperature at or above its melting point and depositing the melted substance onto a moving substrate. The melted substance can be deposited on the substrate at a substantially uniform coating thickness.

The media described herein can be utilized with a wide variety of printing systems. Particular reference is made to inkjet printing systems. Inkjet printing systems facilitate deposition of images on the media 100 by propelling droplets of ink onto the media 100. Types of inkjet printing systems include thermal ink jet printing devices, piezoelectric ink jet printing applications, and other forms of ink jet printing systems.

When used herein, the term "media" refers to any type of media used for printing applications. Media for inkjet printing applications is described herein for exemplary purposes only. The media is not restricted to any particular size. Additionally, the media can have any component types, material-selections, arrangement of media materials or structures, chemical compositions, layering sequences, numbers of layers, layer orientations, thickness values, porosity parameters, material quantities, and other related factors unless expressly stated.

The media is not ink-specific. Since the media is not ink-specific, the media can be used in connection with a variety of inks, dyes, pigments, liquid toner compositions, solid toner compositions, sublimation dyes, waxes, latex, solvent, eco-solvent, UV curable and the like. Dye inks, pigment inks and other aqueous inks used in inkjet printing applications are described herein for exemplary purposes only

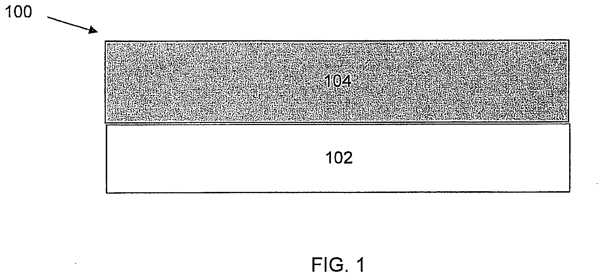

Referring now to FIG. 1, a schematic illustration of a media 100 is shown. The media 100 includes a substrate 102 and an extruded layer 104 that includes a polymer resin that facilitates water absorption from inks used in the printing process and creates a media with high durability. The media 100 is formed in a one-step process that includes extrusion coating the polymer resin on a surface of the substrate 102. The polymer resin includes a hydrogel-based resin and a polyamide-based resin.

The media 100 can be of any dimension, size, shape, thickness, etc. As an example, the media 100 can have a uniform thickness or a non-uniform thickness.

The substrate 102 can be made of any material suitable for printing. The material can include any combination of pulp, wet paper, dry paper, organic material, or the like. Examples of materials that can be used as the substrate 102 include any combination or mixture of cellulosic wood, cloth, non-woven fabric, woven fabric, felt, synthetic or non-cellulosic paper, glass or glass-containing products, metals, polyester, various organic polymer compositions, etc. The substrate 102 can be fibrous and/or porous. The substrate 102 can be in a flat sheet, a roll, a web, a strip, a film, or the like. The substrate 102 can have transparent, semitransparent and/or opaque characteristics.

The substrate 102 alone has poor durability and image quality. To reduce or eliminate poor image quality and poor wet durability, the media also includes an ink receiving layer (also known as an inkjet receiving layer). Generally, the term "ink receiving layer" refers to one or more layers that receive at least a portion of ink materials being delivered to the media in a printing process. The ink receiving layer can be arranged at any location and in any orientation in relation to the substrate 102.

Media 100 includes the extruded layer 104 as its ink receiving layer. According to an example aspect, the extruded layer 104 is the only ink receiving layer of media 100. However, media 100 can have more than one ink receiving layer, as long as the ink receiving layers are extruded, and not deposited through wet coating. For example, media 100 can have two or more extruded layers, each including a different polymer resin combination of a hydrogel-based resin and a polyamide-based resin. As used herein, the terms "extruded layer" and "ink receiving layer" are used interchangeably.

In media 100, the extruded layer 104 coats at least part of the substrate 102. In an example, the extruded layer 104 coats at least 25 percent of the substrate 102.

In an example, the coating weight of the extruded layer 104 is at least 10 g/m². In another example, the coating weight of the extruded layer 104 is at least 20 g/m². Further, the coating weight of the extruded layer 104 is at least 30 g/m².

The extruded layer 104 includes a polymer resin. The polymer resin contains a homo-polymer, a co-polymer, or any combination thereof. The polymers used in the polymer resin include: a hydrogel-based resin and a polyamide-based resin.

The extruded layer 104 facilitates absorption of water content of aqueous inkjet inks. Examples of aqueous inkjet inks are pigment inks and dye inks. Unlike other media coatings, the extruded layer 104 can facilitate absorption of water content of both pigment inks and dye inks.

The extruded layer 104 exhibits "instant dry" characteristics for aqueous inkjet inks. Instant dry generally refers to a characteristic of the extruded layer 104 that absorbs substantially all aqueous portions of the inkjet inks substantially soon after the ink is deposited on the media 100.

For example, extruded layer 104 can absorb 90% or more of the aqueous portions of pigment inks and/or dye inks within 30 seconds of deposition onto media 100. In a further example, extruded layer 104 can absorb 90% or more of the aqueous portions of pigment inks and/or dye inks within 15 seconds of deposition onto media 100. According to another example, extruded layer 104 can absorb 90% or more of the aqueous portions of pigment inks and/or dye inks within 1 second of deposition onto media 100.

In a further example, extruded layer 104 can absorb 98% or more of the aqueous portions of pigment inks and/or dye inks within 30 seconds of deposition onto media 100. In a further example, extruded layer 104 can absorb 98% or more of the aqueous portions of pigment inks and/or dye inks within 15 seconds of deposition onto media 100. According to another example, extruded layer 104 can absorb 98% or more of the aqueous portions of pigment inks and/or dye inks within 1 second of deposition onto media 100.

Media 100 with the extruded layer 104 exhibit good image properties. When used herein, the term "image properties" generally refers to image quality. "Image quality" refers to the fullness, intensity, clarity and overall image characteristics of ink after application to the media. Measures of image quality include color gamut, optical density, and the like. The "image properties" can also refer "durability" properties relating to improved resistance to smearing or blurring when rubbed or otherwise physically engaged with a variety of objects.

The media 100 is formed by applying the polymer resin of the extruded layer 104 directly onto the substrate 102 through a one-step extrusion coating process. The extrusion coating process starts with a solid polymer resin, melts the polymer resin, and applies the polymer resin to the substrate 102 to create the extruded layer 104. In contrast, previous methods have applied inorganic components, like silica, to a media through fluidic coating or wet coating.

The use of inorganic materials like silica in media production is not trivial. Silica is an expensive chemical, and the extra fluidic coating process step adds to the cost of media production. The fluidic coating step requires prior creation of a dispersion mixture containing silica, which needs to be stored. The dispersion mixture is often unstable and pH sensitive with a limited shelf life. In contrast, the organic polymer resin used in the extruded layer 104 is melted in the extrusion coating process, so it can be stored practically indefinitely as a solid pelletized resin that can be used as needed.

The extruded layer 104 gives a substantially similar photo glossy finish to the media 100 as previous multi-stage processing techniques. The extruded media can include polyethylene (PE) to increase glossiness. Moreover, the media can include PE on the side opposite the extruded layer 104 (the back side or the side that is not printed on). The PE layer on the back side can provide, for example, ease of handleability.

The extruded layer 104 allows media 100 to achieve substantially similar favorable image properties as traditional media formed through the multi-step process.

The extruded layer 104 can be extruded onto one side of the media 100 or both sides of the media 100. The extruded layer 104 can have a uniform thickness and a coating weight sufficient to facilitate absorption of the aqueous content of pigment and/or dye ink.

The polymer resin of extruded layer 104 is a polymer, co-polymer, or polymer blend that absorbs water in a high ratio relative to its weight or to its molecular weight. In other words, the polymer resin absorbs water at least substantially similarly to silica. The polymer resin also provides a glossiness and/or favorable image properties substantially similar to media produced using fluidic coating or wet coating of silica or another inorganic chemical onto the media.

The extruded layer 104, in an example, can include an inorganic metal oxide (e.g., zinc oxide, magnesium oxide, titanium oxide, or the like), but the amount of inorganic metal oxide is significantly less than the amount of inorganic materials used in traditional media coatings. Additionally, the inorganic metal oxide is not used as the primary component to facilitate water absorption. Instead, the inorganic metal oxide is used to increase other properties, such as whiteness of the media.

Moreover, the polymer resin 104 in the presence of an inorganic metal oxide facilitates a synergistic effect, increasing absorption of the aqueous portion of an ink (e.g., dye ink or pigment ink) compared to the inorganic metal oxide alone. In an example, the combination of the metal oxide and the polymer resin 104 can increase the absorption by at least an order of magnitude when compared to either the polymer resin 104 or the inorganic metal oxide alone. In an example, the polymer resin 104 can include a hydrogel that, in combination with inorganic metal oxide, increases the absorption by at least an order of magnitude when compared to either the polymer resin 104 or the inorganic metal oxide alone.

The polymer resin is present as the primary component for water absorption. The polymer resin can absorb significantly more than silica. In an example, the polymer resin can absorb at least about 35% more moisture than silica. In another example, the polymer resin can absorb at least about 90% more moisture than silica. In a further example, the polymer resin can absorb at least about 200% more moisture than silica.

In other words, the polymer resin is capable of absorbing equilibrium water contents of at least 100% of the weight of the dry resin.

In another example, the polymer resin is capable of absorbing equilibrium water contents of at least 300% of the weight of the dry resin. In a further example, the polymer resin is capable of absorbing equilibrium water contents of at least 700% of the weight of the dry resin.

The polymer resin, in an example, is a polymer or a co-polymer with a molar mass of at least 88 g/mol. In another example, the polymer resin is a polymer or a co-polymer with a molar mass of at least 122 g/mol. The polymer resin, in a further example, is a polymer or a co-polymer with a molar mass of at least 1000 g/mol.

The polymer resin includes a hydrogel-based resin and a polyamide-based resin. The extruded layer 104 can be one or more ink receiving layers including the same or different amounts of the same or different polymer resins.

The polymer resin includes a hydrogel-based resin. The term "hydrogel" refers to a network of polymer chains (for example, thermoplastic polyurethanes,TPU, and the like) that are water insoluble and that have the ability to absorb aqueous solutions without losing shape or mechanical strength.

A hydrogel-based resin is available commercially from The Lubrizol Corporation of Cleveland, Ohio under the trade names TECOPHILIC® Hydrogel TG-2000 (higher molecular weight) and TG-500 (lower molecular weight), which are specially formatted to absorb equilibrium water contents up to 900% of the weight of the dry resin.

The polymer resin includes a polyamide-based resin. The term "polyamide-based" refers to homopolymers or co-polymers that include organic amide (in other words, at least one polymerized structure with at least one monomer having the general formula RₙC(O)ₓNR'₂, where R and R' are either H or organic groups and x is at least 1 within a repeat unit of the polymer resin). An example of a polyamide-based resin is available commercially as Arkema Polyamide, Rilsan PA 11 and PA 12.

According to an example, the polymer resin can include a carrier resin and one or more additive resins. The carrier resin is the resin present in the largest portion in the polymer resin. The additive resin is any resin that is present in a smaller portion of the polymer resin than the carrier resin.

The polymer resin, in an example, includes a polyamide-based resin carrier and a hydrogel-based resin additive. The hydrogel-based resin and the polyamide-based resin can be present in any ratio that facilitates water absorption and image quality at least substantially similar to silica.

According to an example, the polyamide-based resin and the hydrogel-based resin are present in a ratio of from about 10:1 to about 100:1. In another example, the hydrogel-based resin and the polyamide-based resin are present in a ratio of from about 12:1 to about 75:1. In a further example, the hydrogel-based resin and the polyamide-based resin are present in a ratio of from about 15:1 to about 30:1. In another example, the hydrogel-based resin and the polyamide-based resin are present in a ratio of from about10:1 to about 1:1.

The extruded layer 104 can include molecules in addition to the polymer resin. The additional molecules in the extruded layer 104 can include fillers, which can include inorganic molecules. For example, the extruded layer 104 can include an inorganic filler, such as zinc oxide, magnesium oxide, titanium oxide, or the like. The extruded layer 104 can also include pigments, slip agents, biocides, UV/light projectants and/or absorbents, fade-control agents, preservatives, wetting agents, plasticizers or other additives.

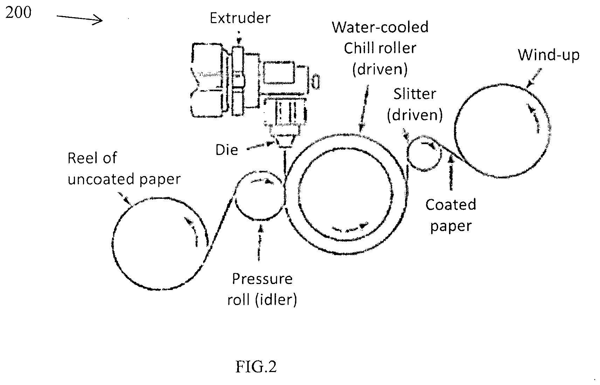

Referring now to FIG. 2, is a schematic diagram 200 for an extrusion process with one-step nipping with raw paper. FIG. 2 illustrates just one example of an extrusion coating process. Any extrusion coating process can be used to extrusion coat the polymer resin on the substrate to create the media composition.

FIG. 2 shows just one extrusion coating step. However, the process to create the media can include more than one step of extrusion coating. The process can, for example, include the application of one or more ink receiving layers through extrusion coating. Generally, the process for producing the media is a one-step process, only involving extrusion coating the polymer resin on the surface of the substrate. Without additional steps, such as fluidic coating or wet deposition, curing, and/or aging.

The extrusion coating process of FIG. 2 the substrate is input to the extrusion coating process from a reel of uncoated substrate. "Paper" is illustrated as the substrate in FIG. 2, but any type of substrate can be used. The polymer resin is coated on the surface of the substrate to facilitate absorption of water from an aqueous ink. The polymer resin absorbs substantially more water than any inorganic component of the media. The polymer resin includes a hydrogel-based resin and a polyamide-based resin.

The substrate can be coated with the polymer resin by extricating the polymer resin from a slot die onto a moving web, which is then passed through a nip, including a rubber covered pressure roller and a chrome plated chill roll, which cools the molten film back into the solid state and also imparts the desired finish to the media surface. After coating and cooling, the coated paper is wound up to create a reel of media (or coated substrate).

### EXPERIMENTAL

### Media Construction

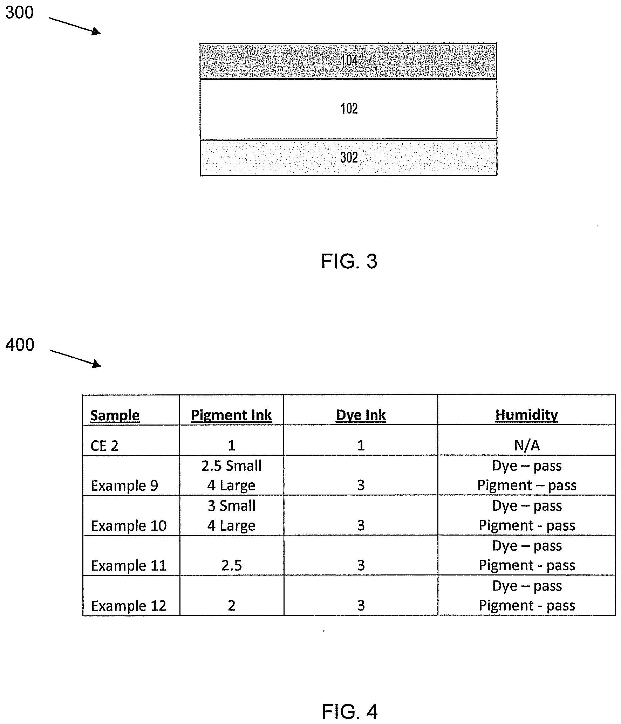

A schematic illustration of the media 300 used in all experiments is shown in FIG. 3. The media 300 includes the substrate 102, the extruded layer 104 on the top side of the substrate and a polyethylene (PE) layer 302 on the bottom side. The PE layer 302 increased the handleability and protection of the media during experimentation.

In the following Examples 2 to 16, 24 and 25 are reference examples and Examples 17 to 23 are invention examples.

### Hydrogel-based Polymer Resin

An extrusion coating process was used to coat the substrate 102 with the extruded layer 104 and the PE layer 302. The substrate 102 was raw base paper for all experiments. The target coating thickness was approximately 25.4 µm (1 mil).

### Comparative Example 1: Raw paper base with no coating.

*Example 2:* Raw paper base, PE resin was extrusion coated on the substrate 102.

Process conditions:
Process temperature profile:

| | |
|---|---|
| zone 1 | 180°C |
| zone 2 | 200°C |
| zone 3 | 210°C |
| zone 4 | 210°C |
| adapter | 210°C |
| die | 210°C |
| Screw speed | 50 RPM |
| Pull speed | 30 RPM |
| Pressure | 2.3 MPa (328 psi) |

*Example 3*: Raw paper base, 320 grams dry weight of the hydrogel Tecophilic® polymer, TPU, HP-60-D-20 was compounded with 80 grams dry weight of PE resin and extrusion coated as the extruded layer 104. The PE layer 302 was added to the back of the media.

Process conditions:
Process temperature profile:

| | |
|---|---|
| zone 1 | 180°C |
| zone 2 | 200°C |
| zone 3 | 210°C |
| zone 4 | 210°C |
| adapter | 210°C |
| die | 210°C |
| Screw speed | 63 RPM |
| Pull speed | 50 RPM |
| Penta | 22 |
| Pressure | 1.4 MPa (198 psi) |

After two weeks, Example 2 (PE only) and Example 3 (Tecophilic® polymer/PE) were compared to Comparative Example 1 (no coating). The lamination of Example 3 was deemed "good" compared to Comparative Example 1 and the lamination of Example 2 was deemed "fair" compared to Example 1. The general qualitative image evaluation for Comparative Example 1 was "very good," for Example 2 was "excellent," and for Example 3 was "good."

### Polyvinyl alcohol-based Polymer Resin

An extrusion coating process was used to coat the substrate 102 with the extruded layer 104 and the PE layer 302. The substrate 102 was raw base paper for all experiments. The target coating thickness was approximately 25.4 µm (1 mil).

*Example 4:* Raw paper base, 200 g dry weight of the polyvinyl alcohol-based resin, G-Polymer OK S 8074, was extruded as the extrusion layer 104. Image quality was qualitatively evaluated as "very good."

*Example 5*: Raw paper base, 170 g dry weight of the polyvinyl alcohol-based resin, G-Polymer OK S 8074 compounded with 30 g dry weight of PE, was extruded as the extrusion layer 104. Image quality was evaluated as "excellent." This composition was observed to stop bleed, yellow on red.

*Example 6*: Raw paper base, 180 g dry weight of the polyvinyl alcohol-based resin, G-Polymer OK S 8074 compounded with 20 g dry weight of PE, was extruded as the extrusion layer 104. Image quality was evaluated as "hi medium."

*Example 7*: Raw paper base, 190 g dry weight of the polyvinyl alcohol-based resin, G-Polymer OK S 8074 compounded with 10 g dry weight of PE, was extruded as the extrusion layer 104. Image quality was evaluated as "medium."

*Example 8*: Raw paper base, 195 g dry weight of the polyvinyl alcohol-based resin, G-Polymer OK S 8074 compounded with 5 g dry weight of PE, was extruded as the extrusion layer 104. Image quality was evaluated as "good." This composition was observed to have little bleed, yellow on red.

### Comparative Example 2: PET base with no coating.

*Example 9:* PET base. The extruded layer 104 included: the polyvinyl alcohol-based resin, G-Polymer OK S 8074.

Extrusion coating process:

| | |
|---|---|
| Pressure | 4.1 MPa (600 psi) |
| Temperature | 221 °C (430 deg F) |
| Screw Speed | 10 rpm |
| Line Speed | 9 m/min (30 fpm) |
| Die | 20 cm (8 in) |
| Screw | 4 cm (1.5 in) |
| Film Thickness | 140 µm (5.5 mil) |
| Adhesion | Very Excellent |

*Example 10:* PET base. The extruded layer 104 included: the polyvinyl alcohol-based resin, G-Polymer OK S 8070.

Extrusion coating process:

| | |
|---|---|
| Pressure | 2.2 MPa (320 psi) |
| Temperature | 210 °C (410 deg F) |
| Screw Speed | 10-12 rpm |
| Line Speed | 9 or 8.5 m/min (30 or 28 fpm) |
| Die | 20 cm (8 in) |
| Screw | 4 cm (1.5 in) |
| Film Thickness | 25.4 µm (1 mil) |
| Adhesion | Fair-Good |

*Example 11:* PET base. The extruded layer 104 included: the polyvinyl alcohol-based resin, G-Polymer OK S 8074.

Extrusion coating process:

| | |
|---|---|
| Pressure | 4.3 MPa (620 psi) |
| Temperature | 221 °C (430 deg F) |
| Screw Speed | 10 rpm |
| Line Speed | 9 m/min (30 fpm) |
| Die | 20 cm (8 in) |
| Screw | 4 cm (1.5 in) |
| Film Thickness | 25.4 µm (1 mil) |
| Adhesion | Poor |

*Example 12:* PET base. The extruded layer 104 included: the polyvinyl alcohol-based resin, G-Polymer OK S 8074.

Extrusion coating process:

| | |
|---|---|
| Pressure | 3.4 MPa (500 psi) |
| Temperature | 232 °C (450 deg F) |
| Screw Speed | 10 rpm |
| Line Speed | 9 m/min (30 fpm) |
| Die | 20 cm (8 in) |
| Screw | 4 cm (1.5 in) |
| Film Thickness | 25.4 µm (1 mil) |
| Adhesion | Poor |

### Comparative Example 3: Raw paper base with no coating.

*Example 13*: Raw paper base. The extruded layer 104 included: the polyvinyl alcohol-based resin, G-Polymer OK S 8074 (85%) and PE (15%).

Extrusion coating process:

| | |
|---|---|
| Pressure | 4.9 MPa (705 psi) |
| Temperature | 210 °C (410 deg F) |
| Screw Speed | 12 rpm |
| Line Speed | 9 m/min (30 fpm) |
| Die | 20 cm (8 in) |
| Screw | 4 cm (1.5 in) |
| Film Thickness | 25.4 µm (1 mil) |
| Adhesion | Good |

*Example 14:* Raw paper base. The extruded layer 104 included: the polyvinyl alcohol-based resin, G-Polymer OK S 8074.

Extrusion coating process:

| | |
|---|---|
| Pressure | 6.9 MPa (995 psi) |
| Temperature | 210 °C (410 deg F) |
| Screw Speed | 20 rpm |
| Line Speed | 3 m/min (10 fpm) |
| Die | 20 cm (8 in) |
| Screw | 4 cm (1.5 in) |
| Film Thickness | 127 µm (5 mil) |
| Adhesion | Excellent |

*Example 15:* Raw paper base. The extruded layer 104 included: the polyvinyl alcohol-based resin, G-Polymer OK S 8070.

Extrusion coating process:

| | |
|---|---|
| Pressure | 2.2 MPa (320 psi) |
| Temperature | 210 °C (410 deg F) |
| Screw Speed | 12 rpm |
| Line Speed | 9 m/min (30 fpm) |
| Die | 20 cm (8 in) |
| Screw | 4 cm (1.5 in) |
| Film Thickness | 25.4 or 19 µm (1 or 0.75 mil) |
| Adhesion | Excellent |

*Example 16:* Raw paper base with tie acrylic layer. The extruded layer 104 included: the polyvinyl alcohol-based resin, G-Polymer OK S 8074.

Extrusion coating process:

| | |
|---|---|
| Pressure | 4.1 MPa (600 psi) |
| Temperature | 221 °C (430 deg F) |
| Screw Speed | 10 rpm |
| Line Speed | 9 m/min (30 fpm) |
| Die | 20 cm (8 in) |
| Screw | 4 cm (1.5 in) |
| Film Thickness | 25.4 µm (1 mil) |
| Adhesion | Good |

### Media Quality Analysis

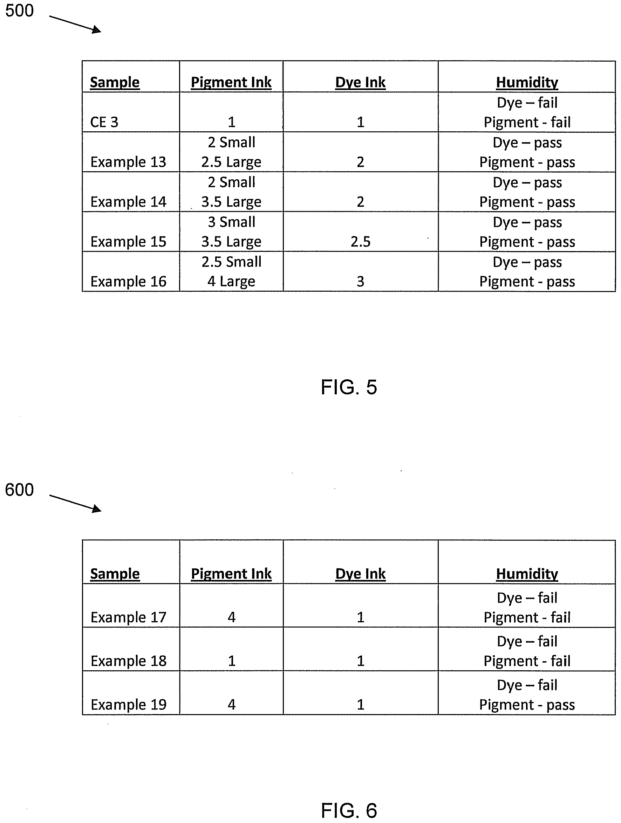

The media of *Examples 9*-*16* were subjected to various image quality tests. Results of these image quality tests for *Examples 9-12* compared to *Comparative Example 2* are shown in the chart 400 of FIG. 4. Results of these image quality tests for *Examples 13-16* compared to *Comparative Example 2* are shown in the chart 500 of FIG. 5.

### Pigment Ink

The overall image quality for pigment ink was tested using both a small format printer (e.g., an office desktop printer), HP Photosmart 8000, and a large format printer (e.g., a commercial printer), HP Z-6200 and HP latex ink printers, L25500, L26500.

Image quality was qualitatively ranked on a scale of 1-4, with 1 being the worst quality and 4 being the best quality.

*Comparative Example 2* (C.E. 2) had a qualitative image quality of 1. *Example 9* had a qualitative image quality of 2 for the small format printer and 2.5 for the large format printer. *Example 10* had a qualitative image quality of 2 for the small format printer and 3.5 for the large format printer. Example 11 had a qualitative image quality of 2.5. Example 12 had a qualitative image quality of 2.

*Comparative Example 3* (C.E. 3) had a qualitative image quality of 1. *Example 13* had a qualitative image quality of 2 for the small format printer and 2.5 for the large format printer. *Example 14* had a qualitative image quality of 2 for the small format printer and 3.5 for the large format printer. *Example 15* had a qualitative image quality of 3 for the small format printer and 3.5 for the large format printer. *Example 16* had a qualitative image quality of 2.5 for the small format printer and 4 for the large format printer.

### Dye Ink

The overall image quality for pigment ink was tested using a small format printer (e.g., an office desktop printer), HP Officejet 75600.

Image quality was qualitatively ranked on a scale of 1-10, with 1 being the worst quality and 10 being the best quality.

*Comparative Example 2* (C.E. 2) had a qualitative image quality of 1. *Examples 9*-*12* had a qualitative image quality of 3.

*Comparative Example 3* (C.E. 3) had a qualitative image quality of 1. *Examples 13 and 14* had a qualitative image quality of 2. *Example 15* had a qualitative image quality of 2.5. *Example 16* had a qualitative image quality of 3.

### Humidity Test

The media spent one week in sealed chamber at a temperature of 30 degrees C at 80% relative humidity and the response to humidity was qualitatively measured for both the pigment ink and the dye ink.

*Comparative Example 2 (C.E. 2)* was not tested. *Examples* 9-12 were all determined to "pass" the humidity test for both the dye ink and the pigment ink.

*Comparative Example 3 (C.E. 3)* was determined to "fail" the humidity test for both the dye ink and the pigment ink. *Examples 13*-*16* were all determined to "pass" the humidity test for both the dye ink and the pigment ink.

### Polyamide/hydrogel-based Polymer Resin

An extrusion coating process was used to coat the substrate 102 with the extruded layer 104. The substrate 102 was raw base paper for all experiments.

### Filler Test - Magnesium Oxide and Titanium Oxide Filler

*Example 17*: Raw paper base. The extruded layer 104 included: polyamide resin, Arkema polyamide, and the hydrogel Tecophilic® TG-2000 polymer (30%), and comparibiblizer additive nylon 6 anhydride (2%). No filler.

Extrusion coating process:

| | |
|---|---|
| Pressure | 9.0 MPa (1300 psi) |
| Temperature | 204 °C (400 deg F) |
| Screw Speed | 10 rpm |
| Line Speed | 6 m/min (20 fpm) |
| Die | 20 cm (8 in) |
| Screw | 4 cm (1.5 in) |
| Film Thickness | 50.8 µm (2 mil) |
| Adhesion | Excellent |

*Example 18*: Raw paper base. The extruded layer 104 included: polyamide resin, Arkema polyamide, and the hydrogel Tecophilic® TG-2000 polymer. No filler.

Extrusion coating process:

| | |
|---|---|
| Temperature | 204 °C (400 deg F) |
| Screw Speed | 10 rpm |
| Line Speed | 4.6 m/min (15 fpm) |
| Die | 20 cm (8 inches) |
| Screw | 4 cm (1.5 in) |
| Film Thickness | 76-2 µm (3 mil) |
| Adhesion | Excellent |

*Example 19*: Raw paper base. The extruded layer 104 included: polyamide resin, Arkema polyamide, and the hydrogel Tecophilic® TG-2000 polymer (30%), and fillers Magnesium Oxide and Titanium Oxide combined with a plasticizer (20% combined).

Extrusion coating process:

| | |
|---|---|
| Pressure | 3.2 MPa (465 psi) |
| Temperature | 204 °C (400 deg F) |
| Screw Speed | 10 rpm |
| Line Speed | 6 m/min (20 fpm) |
| Die | 20 cm (8 inches) |
| Screw | 4 cm (1.5 in) |
| Film Thickness | 50-8 µm (2 mil) |
| Adhesion | Excellent |

### Media Quality Analysis - Filler Test - Magnesium Oxide and Titanium Oxide Filler

The media of *Examples 17*-*19* were subjected to various image quality tests. Results of these image quality tests are shown in the chart 600 of FIG. 6.

### Pigment Ink

The overall image quality for pigment ink was tested using both a small format printer (e.g., an office desktop printer), HP Photosmart 8000, and a large format printer (e.g., a commercial printer), HP Z-6200 and HP latex ink printers, L25500, L26500.

Image quality was qualitatively ranked on a scale of 1-4, with 1 being the worst quality and 4 being the best quality. *Examples 17 and 19* had a qualitative image quality of 4 and *Example 18* had a qualitative image quality of 1.

*Examples 17-19* were all observed to "instant dry." In other words, the polymer resin absorbed the water from the dye ink so that the media dried substantially immediately upon application of the pigment ink.

*Example 19* exhibited the best instant dry capabilities for the pigment ink. The fillers synchronize with the hydrogel to assist with the instant dry feature.

### Dye Ink

The overall image quality for pigment ink was tested using a small format printer (e.g., an office desktop printer), HP Officejet 75600.

Image quality was qualitatively ranked on a scale of 1-10, with 1 being the worst quality and 10 being the best quality. *Examples 16*, *17 and 18* had a qualitative image quality of 1.

*Examples 17*-*19* were all observed to "instant dry." In other words, the polymer resin absorbed the water from the dye ink so that the media dried substantially immediately upon application of the dye ink.

*Example 19* exhibited the best instant dry capabilities for the dye ink. The fillers synchronize with the hydrogel to assist with the instant dry feature.

### Humidity Test

The media spent one week in sealed chamber at a temperature of 30 degrees C at 80% relative humidity and the response to humidity was qualitatively measured for both the pigment ink and the dye ink. *Examples 17*-*19* were all determined to "fail" the humidity test for the dye ink. *Examples 17 and 18* were also determined to "fail" the humidity test for the pigment ink, while *Example 19* was determined to "pass" the humidity test for the pigment ink.

### Media Prepared with Zinc Oxide Filler or Magnesium Oxide Filler

*Example 20:* Raw paper base, 5 grams dry weight of polyamide resin, Arkema polyamide, and 0.2 grams dry weight of the hydrogel Tecophilic® TG-2000 polymer were extrusion coated as the extruded layer 104. Zinc oxide was used as a filler.

*Example 21*: Raw paper base, 5 grams dry weight of polyamide resin, Arkema polyamide, and .2 grams dry weight of the hydrogel Tecophilic® TG-2000 polymer were extrusion coated as the extruded layer 104. Magnesium oxide was used as a filler.

*Example 22*: Raw paper base, 5 grams dry weight of polyamide resin, Arkema polyamide, and 0.3 grams dry weight of the hydrogel Tecophilic® TG-2000 polymer were extrusion coated as the extruded layer 104. Zinc oxide was used as a filler.

*Example 23*: Raw paper base, 5 grams dry weight of polyamide resin, Arkema polyamide, and .3 grams dry weight of the hydrogel Tecophilic® TG-2000 polymer were extrusion coated as the extruded layer 104. Magnesium oxide was used as a filler.

### Media Quality Analysis - Filler Test - Magnesium Oxide and Titanium Oxide Filler

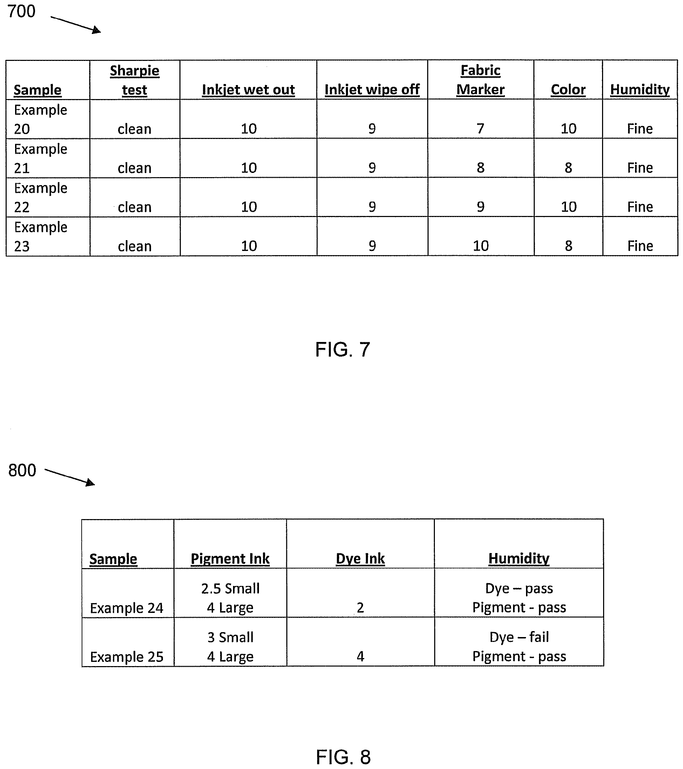

The media of *Examples 20*-*23* were subjected to various image quality tests. Results of these image quality tests are shown in the chart 700 of FIG. 7.

### Sharpie Test

The media were marked with a sharpie and allowed to sit for 10 minutes. Scotch tape was then used to check if the sharpie mark came off of the ink. For *Examples 20*-*23*, the Scotch tape was qualitatively determined to be "clean."

### Inkjet Wet Out

A syringe was used to drop ink on the media, and the ink was dragged across the media before it is allowed to dry. The ink wet out was qualitatively ranked on a scale of 1-10 with 10 being the best quality and 1 being the worst quality.

For *Examples 20*-*23*, the inkjet wet out was qualitatively determined to be "10."

### Inkjet Wipe Off

Ink was applied to the media and allowed to dry for 10 minutes. After 10 minutes, the ink is wiped with brown paper towel. The ink wipe off was qualitatively ranked on a scale of 1-10, with 1 being the most ink wiped off and 10 being the least ink wiped off. For *Examples 20-23*, the inkjet wipe off was qualitatively determined to be "9."

### Color

The color of the media was qualitatively ranked on a scale of 1-10, with white being 10 and brown being 0. For *Examples 20* and *22*, the color was qualitatively determined to be "10." For *Examples 21* and *23*, the color was qualitatively determined to be "8."

### Humidity Test

The media spent 24 hours in sealed jar at room temperature and the response to humidity was qualitatively measured. For *Examples 20-23*, the humidity response was qualitatively determined to be "fine."

### Fabric Marker

A mark with an orange Marvy Uchida Brush Marker was applied to the media. Bleed from the fabric marker qualitatively measured, with 0 being a large amount of bleed and 10 being no bleed. For *Example 20*, the humidity response was qualitatively determined to be "7." For *Example 21*, the humidity response was qualitatively determined to be "8." For *Example 22*, the humidity response was qualitatively determined to be "9." For *Example 23*, the humidity response was qualitatively determined to be "10."

### Polyvinyl alcohol/hydrogel-based Polymer Resin

An extrusion coating process was used to coat the substrate 102 with the extruded layer 104. The substrate 102 was raw base paper for all experiments.

*Example 24*: Raw paper base. The extruded layer 104 included: 8 parts polyvinyl alcohol-based resin, G-Polymer OK S 8074, 1.5 parts PE, and 0.5 parts hydrogel Tecophilic® TG-2000 polymer.

Extrusion coating process:

| | |
|---|---|
| Temperature | 291-235 °C (555-455 deg F) |
| Pressure | 3.1 MPa (450 psi) |
| Screw Speed | 10 rpm |
| Line Speed | 9 m/min (30 fpm) |
| Die | 20 cm (8 inches) |
| Screw | 4 cm (1.5 in) |
| Film Thickness | 25.4 µm (1 mil) |
| Adhesion | Fair-Poor |

*Example 25*: Raw paper base. The extruded layer 104 included: 9 parts polyvinyl alcohol-based resin, G-Polymer OK S 8074, and 1 part hydrogel Tecophilic® TG-2000 polymer.

Extrusion coating process:

| | |
|---|---|
| Temperature | 260 °C (500 deg F) |
| Pressure | 3.1 MPa (450 psi) |
| Screw Speed | 20 rpm |
| Line Speed | 7.6-11.6 m/min (25-38 fpm) |
| Die | 20 cm (8 inches) |
| Screw | 4 cm (1.5 in) |
| Film Thickness | 25.4 µm (1 mil) |
| Adhesion | Very Good |

### Media Quality Analysis

The media of *Examples 24 and 25* were subjected to various image quality tests. Results of these image quality tests are shown in the chart 800 of FIG. 8.

### Pigment Ink

The overall image quality for pigment ink was tested using both a small format printer (e.g., an office desktop printer), HP Photosmart 8000, and a large format printer (e.g., a commercial printer), HP Z-6200 and HP latex ink printers, L25500, L26500.

Image quality was qualitatively ranked on a scale of 1-4, with 1 being the worst quality and 4 being the best quality. *Example 24* had a qualitative image quality of 2.5 for the small format printer and 4 for the large format printer. *Example 25* had a qualitative image quality of 3 for the small format printer and 4 for the large format printer.

### Dye Ink

The overall image quality for pigment ink was tested using a small format printer (e.g., an office desktop printer), HP Officejet 75600.

Image quality was qualitatively ranked on a scale of 1-4, with 1 being the worst quality and 4 being the best quality. *Example 24* had a qualitative image quality of 2 and *Example 25* had a qualitative image quality of 4.

### Humidity Test

The media spent one week in sealed chamber at a temperature of 30 degrees C at 80% relative humidity and the response to humidity was qualitatively measured for both the pigment ink and the dye ink. *Examples 24 and 25* were both determined to "pass" the humidity test for the pigment ink. *Example 24* was also determined to "pass" the humidity test for the dye ink, while *Example 25* was determined to "fail" the humidity test for the dye ink.

Numerical data, such as temperatures, concentrations, times, ratios, and the like, are presented herein in a range format. The range format is used merely for convenience and brevity. The range format is meant to be interpreted flexibly to include not only the numerical values explicitly recited as the limits of the range, but also to include all the individual numerical values or sub-ranges encompassed within the range as if each numerical value and sub-range is explicitly recited.

When reported herein, any numerical data is meant to implicitly include the term "about." Values resulting from experimental error that can occur when taking measurements are meant to be included in the numerical data.

Many variations and modifications can be made to the above-described examples. All such modifications and variations are intended to be included herein within the scope of the disclosure and protected by the following claims. It will be noted that the singular forms "a," "an," and "the" include plural references unless the context clearly indicates otherwise.

## Claims

1. A media composition, comprising:
a substrate; and
an extruded layer on the substrate, the extruded layer comprising a polymer resin that has a water absorption capacity of at least 100% of the dry weight of the polymer resin, **characterised in that** the polymer resin comprises a hydrogel-based resin and a polyamide-based resin.

2. The media composition of claim 1, wherein the extruded layer further comprises at least one inorganic oxide selected from the group consisting of zinc oxide, magnesium oxide, and titanium oxide.

3. The media composition of claim 1, wherein the polymer resin has the water absorption capacity of at least 500% of the dry weight of the polymer resin.

4. A method for producing a media composition, comprising:
extrusion coating a polymer resin on a surface of a substrate, the polymer resin having a water absorption capacity of at least 100% of the dry weight of the polymer resin and **characterised in that** the polymer resin comprises a hydrogel-based resin and a polyamide-based resin.

5. The method of claim 4, wherein the polymer resin further comprises at least one filler selected from the group consisting of zinc oxide, magnesium oxide, and titanium oxide.

6. The method of claim 4, wherein the polymer resin has the water absorption capacity of at least 500% of the dry weight of the polymer resin.

7. The method of claim 4, wherein the polymer resin has the water absorption capacity of at least 800% of the dry weight of the polymer resin.

8. A polymer resin composition for application within an extruded ink receiving layer of a media, comprising
an additive resin comprising a hydrogel-based resin; and
a carrier resin comprising a polyamide-based resin that is present in at least 50% by weight of the polymer resin,
wherein the polymer resin has a water absorption capacity of at least 100% of the dry weight of the polymer resin.

9. The polymer resin of claim 8, wherein the polymer composition has a water absorption capacity of at least 500% of the dry weight of the polymer resin.

10. The polymer resin of claim 8 comprising at least 75% by weight of the carrier resin.

11. The polymer resin of claim 8, wherein the polymer resin facilitates absorption of at least 90 percent water from an aqueous ink within 30 seconds of application of the aqueous ink to the media.

## Patentansprüche

1. Medienzusammensetzung, Folgendes umfassend:
ein Substrat; und
eine extrudierte Schicht auf dem Substrat, wobei die extrudierte Schicht ein Polymerharz umfasst, das eine Wasseraufnahmefähigkeit von wenigstens 100 % des Trockengewichtes des Polymerharzes aufweist, **dadurch gekennzeichnet, dass** das Polymerharz ein Harz auf Hydrogelbasis und ein Harz auf Polyamidbasis umfasst.

2. Medienzusammensetzung nach Anspruch 1, wobei die extrudierte Schicht ferner wenigstens ein anorganisches Oxid umfasst, ausgewählt aus der Gruppe bestehend aus Zinkoxid, Magnesiumoxid und Titanoxid.

3. Medienzusammensetzung nach Anspruch 1, wobei das Polymerharz die Wasseraufnahmefähigkeit von wenigstens 500 % des Trockengewichtes des Polymerharzes aufweist.

4. Verfahren zum Herstellen einer Medienzusammensetzung, Folgendes umfassend:
Extrusionsbeschichten eines Polymerharzes auf einer Oberfläche eines Substrates, wobei das Polymerharz eine Wasseraufnahmefähigkeit von wenigstens 100% des Trockengewichtes des Polymerharzes aufweist und **dadurch gekennzeichnet ist, dass** das Polymerharz ein Harz auf Hydrogelbasis und ein Harz auf Polyamidbasis umfasst.

5. Verfahren nach Anspruch 4, wobei das Polymerharz ferner wenigstens einen Füllstoff umfasst, ausgewählt aus der Gruppe bestehend aus Zinkoxid, Magnesiumoxid und Titanoxid.

6. Verfahren nach Anspruch 4, wobei das Polymerharz die Wasseraufnahmefähigkeit von wenigstens 500 % des Trockengewichtes des Polymerharzes aufweist.

7. Verfahren nach Anspruch 4, wobei das Polymerharz die Wasseraufnahmefähigkeit von wenigstens 800 % des Trockengewichtes des Polymerharzes aufweist.

8. Polymerharzzusammensetzung zur Auftragung in einer extrudierten tintenaufnehmenden Schicht eines Mediums, Folgendes umfassend
ein Additivharz, umfassend ein Harz auf Hydrogelbasis; und
ein Trägerharz, umfassend ein Harz auf Polyamidbasis, das wenigstens mit 50 Gew.-% des Polymerharzes vorhanden ist,
wobei das Polymerharz eine Wasseraufnahmefähigkeit von wenigstens 100 % des Trockengewichtes des Polymerharzes aufweist.

9. Polymerharz nach Anspruch 8, wobei das Polymerharz eine Wasseraufnahmefähigkeit von wenigstens 500 % des Trockengewichtes des Polymerharzes aufweist.

10. Polymerharz nach Anspruch 8, wenigstens 75 Gew.-% des Trägerharzes umfassend.

11. Polymerharz nach Anspruch 8, wobei das Polymerharz die Aufnahme von wenigstens 90 Prozent Wasser von einer wässrigen Tinte innerhalb von 30 Sekunden der Auftragens der wässrigen Tinte auf das Medium ermöglicht.

## Revendications

1. Composition de support comprenant :
un substrat ; et
une couche extrudée sur le substrat, la couche extrudée comprenant une résine de polymère qui a une capacité d'absorption d'eau d'au moins 100 % du poids sec de la résine de polymère, **caractérisée en ce que** la résine de polymère comprend une résine à base d'hydrogel et une résine à base de polyamide.

2. Composition de support selon la revendication 1, la couche extrudée comprenant en outre au moins un oxyde minéral sélectionné dans le groupe constitué d'oxyde de zinc, d'oxyde de magnésium et d'oxyde de titane.

3. Composition de support selon la revendication 1, la résine de polymère ayant la capacité d'absorption d'eau d'au moins 500 % du poids sec de la résine de polymère.

4. Procédé de production d'une composition de support comprenant :
un revêtement d'extrusion d'une résine de polymère sur une surface d'un substrat, la résine de polymère ayant une capacité d'absorption d'eau d'au moins 100 % du poids sec de la résine de polymère et **caractérisé en ce que** la résine de polymère comprend une résine à base d'hydrogel et une résine à base de polyamide.

5. Procédé selon la revendication 4, la résine de polymère comprenant en outre au moins une charge sélectionnée dans le groupe constitué d'oxyde de zinc, d'oxyde de magnésium et d'oxyde de titane.

6. Procédé selon la revendication 4, la résine de polymère ayant la capacité d'absorption d'eau d'au moins 500 % du poids sec de la résine de polymère.

7. Procédé selon la revendication 4, la résine de polymère ayant la capacité d'absorption d'eau d'au moins 800 % du poids sec de la résine de polymère.

8. Composition de résine de polymère destinée à être appliquée à l'intérieur d'une couche de réception d'encre extrudée d'un support, comprenant
une résine additive comprenant une résine à base d'hydrogel ; et
une résine de support comprenant une résine à base de polyamide qui est présente dans au moins 50 % en poids de la résine de polymère,
la résine de polymère ayant une capacité d'absorption d'eau d'au moins 100 % du poids sec de la résine de polymère.

9. Résine de polymère selon la revendication 8, la composition de polymère ayant une capacité d'absorption d'eau d'au moins 500 % du poids sec de la résine de polymère.

10. Résine de polymère selon la revendication 8 comprenant au moins 75 % en poids de la résine de support.

11. Résine de polymère selon la revendication 8, la résine de polymère facilitant l'absorption d'au moins 90 pour cent d'eau d'une encre aqueuse dans les 30 secondes d'application de l'encre aqueuse sur le support.
